# EUROPEAN PATENT APPLICATION

(11) **EP 2 521 051 A2**
(43) Date of publication of application: **07.11.2012**
(21) Application number: 12166453.6
(22) Date of filing: 02.05.2012
(51) Int. Cl.: G06F 17/30

(54) **Handheld electronic device and method for recording multimedia clip**

(30) Priority: 03.05.2011 US 201161481749 P
(71) Applicant: HTC Corporation, Taoyuan County 330 (TW)
(72) Inventor: Wu, Kun-Da, Taoyuan County 330 (TW); Tseng, Te-Pei, Taiwan County 330 (TW); Chang, Kai-Liang, Taoyuan County 330 (TW)
(74) Representative: Granleese, Rhian Jane

(57) **Abstract**

A method for recording a multimedia clip used in a handheld electronic device is provided. The method comprises the steps outlined in the sentences that follow. An input command is received. An embedded program code of a multimedia clip in a web page is detected. A thumbnail corresponding to the multimedia clip is retrieved. A record file is generated, in which the record file is shown as the thumbnail on a display module of the handheld electronic device such that it is associated with the embedded program code and a URL corresponding to the embedded program. A handheld electronic device is disclosed herein as well.

## Description

### BACKGROUND

### Technical Field

The present disclosure relates to a system and a method for data processing. More particularly, the present disclosure relates to a handheld electronic device and a method for recording multimedia clip.

### Description of Related Art

Handheld electronic devices are essential communication tools in the modern life. Besides the traditional voice communication, the network communication is becoming an indispensable function for the handheld electronic devices. Today embedded video or audio files are everywhere in web pages in surfing the Internet. Accordingly, in accessing the newtwork through the handheld electronic device, the user may watch the video or listen to the music embedded in the web page. However, if the user wants to watch the same video or listen to the same music again, he or she has to find the corresponding web page first. When the user forgets the address of the web page, the user may have to spend more time to surf the internet so as to find the web page.

Accordingly, there is still a need of a handheld electronic device and a method for recording multimedia clip so as to search the multimedia clip conveniently for the user. The present disclosure addresses such a need.

### SUMMARY

An aspect of the present disclosure is to provide a method for recording a multimedia clip used in a handheld electronic device. The method comprises the steps outlined below. An input command is received. An embedded program code of the multimedia clip in a web page is detected according to the input command. A thumbnail corresponding to the multimedia clip is retrieved. A record file is then generated, in which the record file is shown as the thumbnail on a display module of the handheld electronic device, such that it is associated with the embedded program code and a URL corresponding to the embedded program code.

Another aspect of the present disclosure is to provide a handheld electronic device. The handheld electronic device comprises a display module, a network module, an input module, a detection module, an associating module and a database. The network module accesses a web page and thus the web page is displayed on the display module. The input module receives an input command. The detection module detects an embedded program code of a multimedia clip in a web page according to the input command and retrieves a thumbnail corresponding to the multimedia clip. The associating module generates a record file, which is shown as the thumbnail on the display module, such that it is associated with the embedded program code and a URL corresponding to the embedded program code. The database stores the record file.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiments, with reference made to the accompanying drawings as follows:
FIG. 1 is a block diagram of a handheld electronic device for recording a multimedia clip in an embodiment of the present disclosure;
FIG. 2 a top view of the handheld electronic device depicted in FIG. 1;
FIG. 3 is a top view of the handheld electronic device in another embodiment of the present disclosure;
FIG. 4 is a flow chart of a method for recording a multimedia clip in an embodiment of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

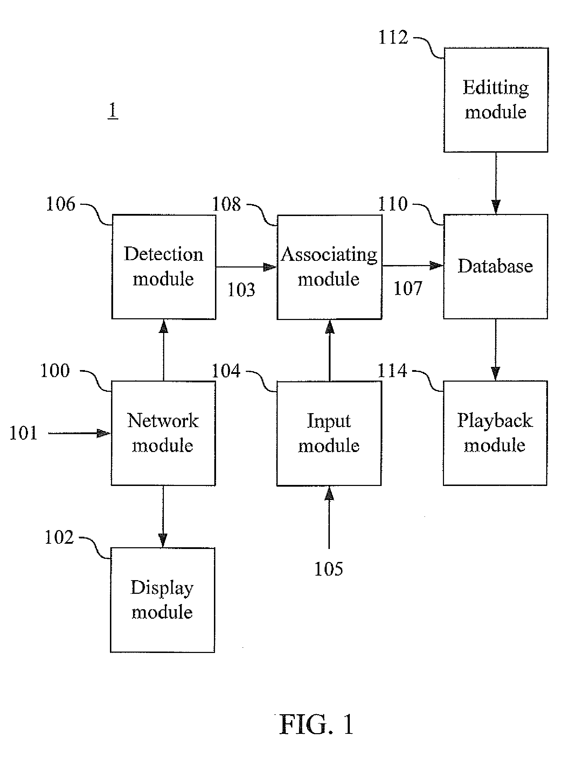

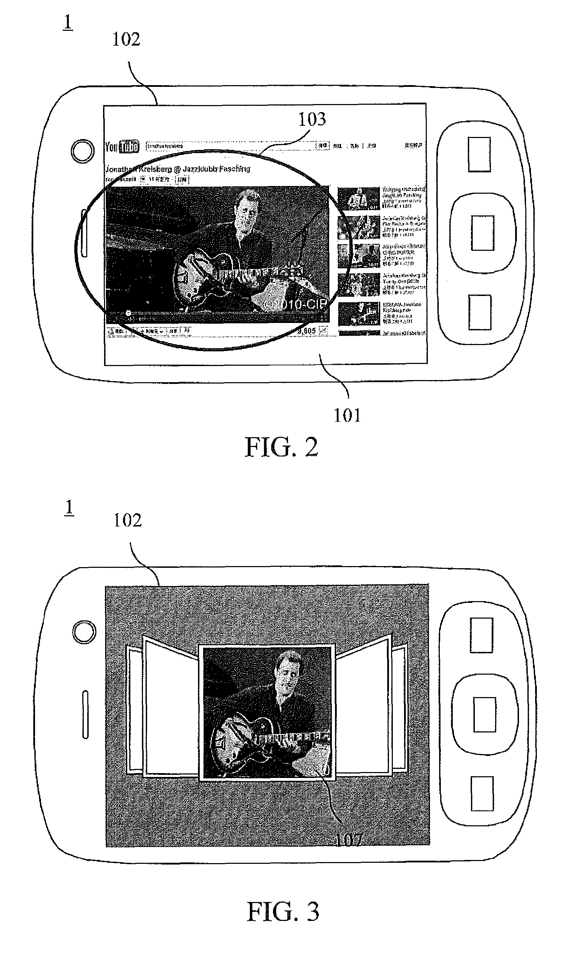

FIG. 1 is a block diagram of a handheld electronic device 1 for recording a multimedia clip in an embodiment of the present disclosure. FIG. 2 a top view of the handheld electronic device 1 depicted in FIG. 1. The handheld electronic device 1 comprises a network module 100, a display module 102, an input module 104, a detection module 106, an associating module 108 and a database 110.

The handheld electronic device 1 can be a cell phone, a Smartphone, a Tablet PC, a PDA (personal digital assistant) or other portable electronic systems that is able to access the network. In the present embodiment, the handheld electronic device 1 accesses the network through the network module 100. In an embodiment, the network module 100 can access a web page 101 in a remote-end server (not shown) and the display module 102 can display the content of the web page 101.

There are lots of multimedia clips, whether in a still image format, a motion image format or an audio format, embedded in the web pages of various websites such as YouTube, GoogleVideo or MySpace. Hence, the user can view the picture and the video or listen to the music embedded in the web pages when the network module 100 accesses the web pages. For example, the web page 101 displayed by the display module 102 of the handheld electronic device 1 comprises a multimedia clip 103 that has a motion image format. Nevertheless, when the user wants to access the same multimedia clip again, the user has to access the corresponding web page first. When the user forgets the address of the web page, the user may have to spend more time to find the web page first.

The input module 104 of the present embodiment receives an input command 105, which is for selecting the multimedia clip 103 embedded in the web page accessed by the network module 100. In an embodiment, the input module 104 is a touch input module that is able to detect a touch input on the display module 12. In other embodiments, the input module 104 can be implemented by physical keys as well.

The detection module 106 detects an embedded program code of the multimedia clip 103 in the web page 101 according to the input command 105 and retrieves a thumbnail corresponding to the multimedia clip 193. The embedded program code can be a Hypertext Markup Language (HTML) code or other kinds of codes. For example, the embedded program code is in the form of: <frame width="560" height="315" src="http://www.youtube.com/embed/LzMKlQSpxlk" frameborder="0" allowfullscreen></iframe>,

In an embodiment, the thumbnail is retrieved from a content of the multimedia clip 103. For example, the detection module 106 can retrieve parts of the frame of the multimedia clip 103 as the thumbnail when the multimedia clip 103 is a motion image. When the multimedia clip 103 is a still image, the detection module 106 can directly use the still image as the thumbnail. In another embodiment, when the multimedia clip 103 is an audio format, the detection module 106 can retrieve the content of the corresponding web page as the thumbnail since there is no image content in the audio format multimedia clip. It is noted that the above description is simply an example. Alternative methods can be used to retrieve the thumbnail of the multimedia clip 103 in other embodiments.

The associating module 108 generates a record file 107 and stores the record file 107 in the database 110. The record file 107 associates the thumbnail, the embedded program code and the URL corresponding to the embedded program code. The record file 107 is shown as the thumbnail on a display module 102 of the handheld electronic device 1. FIG. 3 is a top view of the handheld electronic device 1 in another embodiment of the present disclosure. In FIG. 3, the display module 102 shows the record file 107 generated according to the multimedia clip 103 depicted in FIG. 2 as a thumbnail. In another embodiment, the record file 107 is associated with the title of the web page and both the record file 107 and the title of the web page can be shown on the display module 102. In an embodiment, the handheld electronic device 1 comprises an editing module for deleting, browsing or inquiring the record file 107 in the database 110.

Therefore, when the user wants to find the multimedia clip 103, the user simply needs to search the corresponding record file 107 in the database according to the thumbnail. In an embodiment, the handheld electronic device 1 further comprises a playback module 114 to play back the multimedia clip 103 according to record file 107 associated to the corresponding URL.

It is also noted that the display module 102 and the input module 104 can be implemented by one touch screen. The network module 100, the detection module 106 and the associating module 108 can be implemented by a processor. The database can be implemented by a memory or other hardware that can stores data.

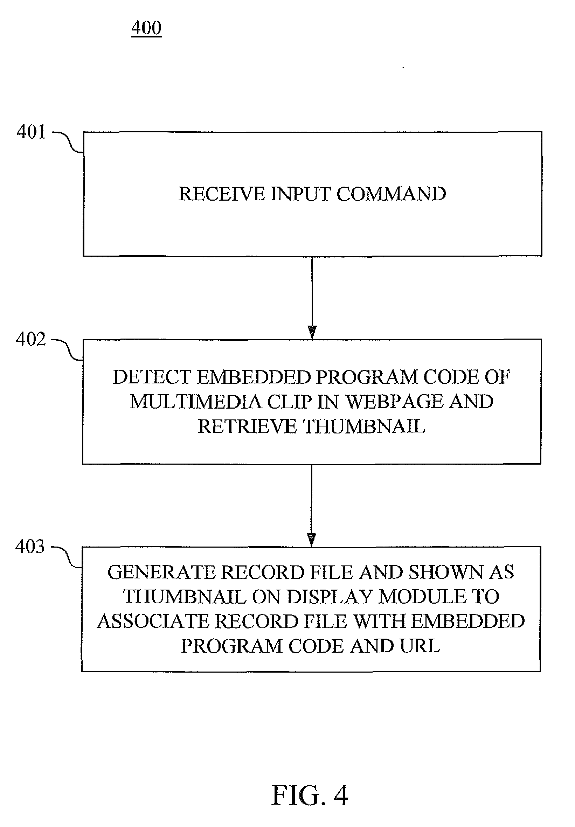

FIG. 4 is a flow chart of a method 400 for recording a multimedia clip in an embodiment of the present disclosure. The method 400 can be used in the handheld electronic device 1 depicted in FIG. 1. The method 400 comprises the steps outlined below. It is noteworthy that the steps are not limited to the recited sequence. That is, unless the sequence of the steps is explicitly indicated, the sequence of the steps is changeable, and all or part of the steps may be simultaneously, partially simultaneously, or sequentially performed.

In step 401, the input module 104 receives an input command 105.

In step 402, the detection module 10 detects an embedded program code of the multimedia clip 103 in a web page 101 according to the input command 105 and further retrieves a thumbnail corresponding to the multimedia clip 103.

In step 403, the associating module 108 generates a record file 107, in which the record file 107 is shown as the thumbnail on a display module 102 of the handheld electronic device 1 such that it is associated with the embedded program code and a corresponding URL.

The handheld electronic device and the method for recording multimedia clip of the present disclosure can store the embedded program code and the address of the multimedia clip in the form of the thumbnail. Hence the user can search, play back or edit the multimedia clip rapidly.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A method for recording a multimedia clip used in a handheld electronic device, the method comprising:
receiving an input command;
detecting an embedded program code of the multimedia clip in a web page according to the input command;
retrieving a thumbnail corresponding to the multimedia clip; and
generating a record file, which is shown as the thumbnail on a display module of the handheld electronic device, such that the record file is associated with the embedded program code and a URL corresponding to the embedded program.

2. The method of claim 1, further comprising playing back the multimedia clip according to the URL associated with the record file.

3. The method of claim 1, wherein the multimedia clip is a still image format, a motion image format or an audio format.

4. The method of claim 1, wherein the record file is further associated with a title of the URL.

5. The method of claim 1, wherein the embedded program code is a Hypertext Markup Language (HTML) code.

6. The method of claim 1, wherein the thumbnail is retrieved from a content of the multimedia clip or the web page.

7. A handheld electronic device comprising:
a display module;
a network module for accessing a web page to display the web page on the display module;
an input module for receiving an input command;
a detection module for detecting an embedded program code of a multimedia clip in a web page according to the input command and for retrieving a thumbnail corresponding to the multimedia clip;
an associating module for generating a record file, wherein the record file is shown as the thumbnail on the display module, such that the record file is associated with the embedded program code and a URL corresponding to the embedded program code; and
a database for storing the record file.

8. The handheld electronic device of claim 7, further comprising a playback module for playing back the multimedia clip according to the URL associated with the record file.

9. The handheld electronic device of claim 7, wherein the multimedia clip is a still image format, a motion image format or an audio format.

10. The handheld electronic device of claim 7, wherein the record file is further associated with a title of the URL.

11. The handheld electronic device of claim 7, wherein the embedded program code is a Hypertext Markup Language (HTML) code.

12. The handheld electronic device of claim 7, further comprising an editing module for deleting, browsing or inquiring the record file in the database.

13. The handheld electronic device of claim 7, wherein the thumbnail is retrieved from a content of the multimedia clip or the web page.
